(19)

**Europäisches Patentamt**
**European Patent Office**
**Office européen des brevets**

(11) **EP 4 625 747 A1**

(12) **EUROPEAN PATENT APPLICATION**

(43) Date of publication:
01.10.2025  Bulletin 2025/40

(21) Application number: 24382330.9

(22) Date of filing: **27.03.2024**

(51) International Patent Classification (IPC):
**H02J 3/38** (2006.01)

(52) Cooperative Patent Classification (CPC):
**H02J 3/381;** H02J 2203/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Gamesa Renewable Energy Innovation & Technology S.L.**
**31621 Sarriguren (Navarra) (ES)**

(72) Inventor: **The designation of the inventor has not yet been filed**

(74) Representative: **SGRE-Association**
**Siemens Energy Global GmbH & Co. KG**
**SE I IM P Intellectual Property**
**Siemenspromenade 9**
**91058 Erlangen (DE)**

(54) **DETERMINING POWER CONVERTER CHARACTERISTIC AND PERFORMING STABILITY ANALYSIS**

(57)     It is described a method of determining an electrical characteristic at least of a physical power converter (15) of a wind turbine (1) connected to a utility grid (7) in real time and in particular determining an electrical characteristic of the utility grid (7) in real time, the method comprising: providing a digital representation (15'), in particular including a digital twin, of the power converter (15) adapted to simulate operation of the physical power converter; obtaining a value (8) of at least one electrical parameter (U_pcc) of the utility grid (7); defining at least one first perturbation signal pattern (16a, 16b) for the electrical parameter (U_pcc) of the utility grid; combining, in particular summing component wise, the electrical parameter value (8) of the utility grid and the first perturbation signal pattern (16a, 16b) for the electrical parameter of the utility grid, to obtain a first test signal pattern (17a, 17b) of the electrical parameter (U_pcc) of the utility grid; simulating the operation of the converter upon supplying the first test signal pattern (17a, 17b) to the digital representation (15') of the power converter; determining the electrical characteristic (Z_output) of the power converter (15) based on simulated voltages (u_pcc) and currents (12) at an output terminal of the digital representation (15') of the power converter or at a digital representation of a point of common coupling.

FIG 1

EP 4 625 747 A1

## Description

Field of invention

The present invention relates to a method and to a corresponding arrangement of determining an electrical characteristic of at least a physical power converter of a wind turbine. Furthermore, the present invention relates to a method of adapting a controller of a power converter of a wind turbine and still further relates to a wind turbine comprising the arrangement for determining the characteristic of the power converter.

The determination of the power converter characteristics and/or performing the real-time stability analysis may be based on the concept of Digital Twin.

The integration of the digital twin concept into the control system of a wind turbine, including technologies such as Doubly Fed Induction Generator (DFIG) and Full Converter (FC)is presented. This incorporation facilitates real-time stability analysis, which serves as a benchmark to assess the need for control adjustments in the physical system. In addition, DT offers the advantage of preemptively testing control changes in a virtual environment, ensuring that new control parameters have the expected characteristics before implementation in the physical system.

The concept of integrating the digital twin concept to obtain the output impedance of the turbine is presented in order to perform a real-time stability analysis. Based on the above, it introduces the possibility of dynamically modifying the controls to ensure greater system robustness.

The field of the invention is also concerned in the context of the control system of a wind turbine (including DFIG and FC technology). In this scenario, the integration of digital twin (DT) technology is proposed as a tool to perform a real-time stability analysis to serve as a basis or metric to determine whether adaptations are needed in the control of the actual physical system. Another fundamental advantage introduced by DT is to be able to test the possible change in the control in the virtual environment beforehand, that is, to test the performance of the new constants in the digital replica, ensuring that the new control has the expected characteristics before modifying it on the real system.

Art Background

The energy sector is undergoing a transition to a more cost-effective, low carbon and sustainable future, starting with the replacement of synchronous generators by renewable generation based on power electronics. The application of power electronic converters enables efficient power flow control, nevertheless, they introduce a series of implications for massive connections to the grid compared to traditional energy generation. System inertia is being drastically reduced and faster dynamics are being observed.

As a result, interactions between grid and all elements connected i.e. STATCOM, WTGs, PV ... are increasing. Indeed, traditional power system stability classification has been updated incorporating converter-driven interaction. This category highlights stability issues due to the interaction between the controller of power electronic devices and the grid. It must be noted that these interactions (fast and slow) are more prone in weak grids. In this context, is essential to evaluate stability margins online. As, instability conditions and a malfunctioning of the equipment may be seen eroding final performance.

Conventionally, wind turbine generator (WTG) controls rely on local magnitudes. i.e. measurements at WTG connection point. These controllers commonly are being designed taking into account robustness theory for guaranteeing their stability in all operational range. Hence, single set of parameters is considered for all operational set, not adapting them online.

Moreover it must be noted that wind power plant controllers are also considered on top. However as in the case of WTGs controllers, conventionally, not online adaptation of their parameters is done for optimizing their operation. This operation is the recommended one in current context. However, it may not be sufficient in future systems in which operational points could drastically differ. Indeed wind farms may be requested to operate in completely different environments where a robust design may not be sufficient (e.g. ongrid and offgrid).

Researchers are already considering the need of adapting controllers. Different alternatives of increasing complexity have been suggested, gain scheduling, predictive controllers, multi-agents.

WTG output impedance and the impedance of the system to which it is to be connected must be taken into account when designing these controls to ensure stability.

Regarding the output impedance, it is conventionally obtained by theoretical and offline analysis, including modelling of non-linear behaviour introduced by saturation effects, PLL/FLL and operation points. This task is not straightforward to solve because it is challenging to introduce all the effects and disturbances that could occur in the operation of an actual wind turbine.

With regard to grid impedance, offline impedance measurements have conventionally been used, but they are insufficient to guarantee a robust control design, since the impedance varies over time depending on a wide range of parameters.

**EP 4 625 747 A1**

Recent studies have presented suitable methods for a fast and accurate online impedance measurements. Most methods are based on the injection of broadband sequences in dq domain, such as impulse or pseudo-random perturbation sequences (PRBS). This type of perturbation can be easily designed and generated by a low-cost hardware platform, in addition, it is desirable for sensitive systems in which normal operation must be assured during the impedance identification process.

Conventional methods and systems often required offline testing and assessment of power converter operation in order to determine the electrical characteristic of the power converter. Thus, conventional methods may be very cumbersome and require a lot of time and costs.

Thus, there may be a need for a method and a corresponding arrangement of determining an electrical characteristic at least of a power converter of a wind turbine which may provide reliable results in a time-effective and cost-effective manner. Furthermore, there may be a need for a method of adapting a controller of a power converter of a wind turbine, wherein power controller settings may be reliable by determined. Further, there may be a need for a wind turbine having a controller with improved controller parameter settings.

Summary of the Invention

This need may be met by the subject matter according to the independent claims. Advantageous embodiments of the present invention are described by the dependent claims, taking into account that each example is provided by way of explanation of the invention, not limitation of the invention.

According to an embodiment of the present invention it is provided a method of determining an electrical characteristic at least of a (a part of a a complete) physical power converter or a generator system (e.g. DFIG or PMSG or FC) of a wind turbine connected to a utility grid in real time and in particular determining an electrical characteristic of the utility grid in real time, the method comprising: providing a digital representation, in particular including a digital twin, of the power converter or the generator system adapted to simulate operation of the physical power converter or the generator system; obtaining a value of at least one electrical parameter of the utility grid; defining at least one first perturbation signal pattern for the electrical parameter of the utility grid; combining, in particular summing component wise, the electrical parameter value of the utility grid and the first perturbation signal pattern for the electrical parameter of the utility grid, to obtain a first test signal pattern of the electrical parameter of the utility grid; simulating the operation of the converter (under the perturbation) or the generator system upon supplying the first test signal pattern to the digital representation of the power converter or the generator system; determining the electrical characteristic (e.g. impedance value in a certain frequency range) of the power converter or the generator system based on simulated voltages and currents at an output terminal of the digital representation of the power converter or the generator system or at a digital representation of a point of common coupling.

The use of a broadband perturbation system of the PRBS type may be applied because of its ease of implementation.

In addition, it should be noted that there are effectively two PRBS perturbation patterns, each of them may be formed by a sequence called MLBS and IRS, being examples of different signal patterns (other are possible). These two types of disturbance patterns are totally independent, i.e. their design is not interrelated, since one is used to estimate the physical grid impedance through the voltage/current ratio measured in the physical system, while the other pattern is introduced in the DT to estimate the output impedance from the disturbed voltage signal itself and the current generated in the model, whose dynamics will depend on the model emulated by the DT and the virtual control.

A first disturbance signal may be introduced for obtaining grid impedance. The magnitude may be limited due to power quality requirements. A second disturbance signal may be introduced in the digital twin for computing converter impedance. No limitations due to power quality may apply.

The digital representation is not fixed but can vary depending on the system to be emulated. In the case of a wind turbine modelled as a current source controlled by the control algorithms that have been implemented, it will use the voltages measured at the PCC as input. However, if the system acts as a grid forming system, i.e. it controls the PCC grid in a certain way with voltage and frequency setpoints, the digital representation will be modelled as a controlled voltage source and, therefore, the inputs to the model will be the currents measured at the PCC.

The method may be implemented in software and/or hardware and may for example be performed or carried out or controlled by a component of a wind turbine, in particular a component or portion of a wind turbine controller.

The method may be performed in real time or online, i.e., during for example normal operation of the wind turbine. The method may not require particular testing equipment or a testing site.

The electrical characteristic of the power converter or the generator system (e.g. comprising a DFIG or permanent magnet synchronous machine or other type generator) may comprise information regarding to the response of the power converter or the generator system to particular harmonics of electrical disturbances which might for example occur at the utility grid the power converter is connected to. The electrical characteristic may for example be obtained across a frequency range between for example a fundamental frequency, like 50 Hz or 60 Hz, or several thousand Hz, such

3

as between 1000 and 10000 Hz. Knowing or determining the electrical characteristic over such a frequency range may enable to correspondingly adapt at least one controller parameter setting of a power converter controller.

The power converter may comprise plural controllable switches, such as power transistors, in particular IGBTs, which may be connected between two DC voltage terminals of a DC link in order to convert an AC power stream to a DC power stream and vice versa. In particular, the power converter may comprise an AC/DC portion being capable of converting a variable frequency power stream received from a generator of the wind turbine to a substantially DC power stream at a DC link. Further, the power converter may comprise a DC/AC converter portion being capable of converting the DC power at the DC link to an AC power having a desired frequency, such as a nominal frequency, for example 50 Hz or 60 Hz, which may then be supplied to the utility grid via one or more transformers.

For responding to grid events, such as perturbations and/or power oscillations and/or voltage variations including voltage drops or excess voltages during transients, the wind turbine, in particular the power converter, may need to respond correspondingly in order to for example damp the perturbations or at least continue operation despite the perturbations. The power converter needs to be controlled, for example by a converter controller, to react or respond properly to the disturbances. When the electrical characteristic of the power converter is determined across a particular frequency range, power converter controller parameter settings may be adjusted appropriately for appropriate responses.

The method does not need necessarily also determine the electrical characteristic, in particular impedance, of the utility grid, but need to at least determine the electrical characteristic of the power converter.

It is necessary to know the grid impedance, in order to carry out stability analysis (see also below), since it is based on the interaction of impedances. The way to obtain grid impedance is completely free, and any method that can be found in the state of the art can be used.

The digital representation of the power converter or the generator system may be configured to model the behaviour, in particular the electrical quantities (input, output and internal quantities) of the power converter or the generator system or the entire wind turbine, thereby providing a physical/mathematical model of the flow of currents and/or power and the occurring voltages. For example, a grid output filter (e.g. L-type or LC-type of other type), an AC/DC portion of the power converter as well as a DC link may be modelled.

In other embodiments the digital representation may relate or model the whole wind turbine system or generator system, including e.g. the generator and the converter generator side portion and/or DC-link and/or converter grid side portion.

In particular, the converter portion which is connected to the utility grid may be modelled while the generator converter portion which is connected to the generator of the wind turbine may not necessarily be modelled.

The digital representation may relate to modelling (or a model of) at least (grid side portion of) one converter, or modelling (or a model of) a system comprising at least one (or more) converter (including grid side portion and/or DC-link and/or generator side portion) and one or more other components of a drive train, in particular including a generator, or modelling (or a model of) the entire wind turbine.

Features of the following description relating to the digital representation of the power converter (or a portion thereof) may be applied to one or more entire converters, or generator system or an entire wind turbine.

The digital representation of the power controller may substantially be controlled in the same or in a similar manner as the physical power converter. The digital representation may obtain one or more measurement values relating to the physical system, for example relating to the voltage at the DC link and/or to the voltage at a point of common coupling. Thus, the digital representation may, for simulation, receive real time electrical measurement values relating to the physical power converter and/or the utility grid.

The electrical parameter of the utility grid may in particular comprise a voltage and/or current at a point of common coupling or at a low voltage side or a high voltage side of a wind turbine transformer and/or an active power flow and/or reactive power flow and/or a phase angle and/or an active current and/or a reactive current at the point of common coupling or a point being connected to the point of common coupling.

The input for digital representation may include current and/or voltage (depending e.g. on whether the converter/-wind turbine is operated according to current control or voltage control) at a point of common coupling (or at another location connected to the point of common coupling).

The first perturbation signal pattern may be designed to simulate a perturbation at the utility grid, which is, however, not actually happening in the utility grid but which may occur during any future fault event, for example. The first perturbation signal pattern may be designed such that the response or the reaction of the power converter may advantageously be provoked, not in the physical power converter, but in the digital representation of the power converter. The digital representation of the power converter may be configured such that the digital response of the digital representation of the power converter or generator system may be very similar to an actual response of the power converter or generator system when the physical power converter or generator system would be exposed to the perturbation as defined by the first perturbation signal pattern.

The first perturbation signal pattern may then be combined with the electrical parameter of the utility grid to obtain the first test signal pattern. Thereby, according to one implementation or embodiment, the first perturbation signal pattern may be combined or summed with a constant nominal grid voltage or current for example not requiring to actually measure the utility grid voltage (for example at the point of common coupling) or at a low voltage side or a high voltage side of a wind plant transformer. Thus, according to this embodiment, it may not be required to actually measure the voltage or current of the utility grid but it may be assumed that the voltage or current of the grid is constant and that a perturbation may be defined by adding the first perturbation signal pattern to a constant for example voltage value representing the utility grid voltage or current.

The first test signal pattern is then supplied to the physical representation of the power converter for example at respective input ports for the physical representation at which the grid voltage, in particular voltage at the point of common coupling, is to be input.

For determining the electrical characteristic of the power converter, the physical power converter is, however, not supplied with the first test signal pattern, but may receive for example the actually measured voltage of the utility grid, being the unperturbed utility grid voltage.

For computing the grid impedance, disturbed signals must be considered. As power quality requirements should be fulfilled, magnitude of the distortion is limited. Distortion could be continuously introduced, or it may be introduced with a certain frequency, depending on the forecast of grid conditions variations. Measurements of grid (voltage, current) may be employed by the virtual/digital system. Virtual/Digital system could considers higher distorted magnitude as power quality requirement does not apply.

Thus, for determining the characteristic of the power converter, the digital representation of the power converter is provided with a specially designed perturbed utility grid voltage, while the physical power converter receives or is provided with the unperturbed actually measured utility grid voltage (one example of at least one electrical parameter of the utility grid).

The simulation may involve that the digital representation of the power converter reacts or responds to the first test signal pattern and thereby the respective currents and voltages, for example at an output terminal of the digital representation, may deviate from respective currents and voltages when the digital representation would receive the unperturbed utility grid electrical parameter or value. The currents and voltages thus simulated in the digital representation may be utilized to determine the characteristics of the real power converter, since the digital representation has been designed to operate as the physical power converter. For example, by forming a ratio between output voltage and output current, the impedance of the power converter, in particular for a particular frequency range, may be derivable. Having determined the impedance across a frequency range may then enable to perform for example stability analysis and/or adapt controller parameter settings.

According to an embodiment of the present invention (in particular using digital twin (DT) technology and/or identification techniques based on the injection of pseudo-random broadband sequences (e.g. PRBS), grid and output converter impedances can be estimated and be used for evaluating stability margins and consequently adapt converter controller gains for maximizing the correct operation of the system.

According to an embodiment of the present invention the concept of integrating the digital twin concept to obtain the output impedance of the turbine is presented in order to perform a real-time stability analysis. Based on the above, it introduces the possibility of dynamically modifying the controls to ensure greater system robustness.

Embodiments of the invention may be focused in the context of the control system of a wind turbine (including DFIG and FC technology). In this scenario, the integration of digital twin (DT) technology is proposed as a tool to perform a real-time stability analysis to serve as a basis or metric to determine whether adaptations are needed in the control of the actual physical system. Another fundamental advantage introduced by DT may be to be able to test the possible change in the control in the virtual environment beforehand, that is, to test the performance of the new constants in the digital replica, ensuring that the new control has the expected characteristics before modifying it on the real system.

According to an embodiment of the present invention, the electrical characteristic of the power converter comprises an output impedance (e.g. Z_output) or admittance of the power converter and/or wherein the at least one electrical parameter of the utility grid comprises a voltage or current at a point of common coupling at which plural wind turbines are connected to provide output power, in particular a PCC-voltage, and/or wherein obtaining the value of the at least one electrical parameter of the utility grid comprises measuring a value of the voltage or current of a point of common coupling. Thereby, the method may be performed in a simple manner.

According to an embodiment of the present invention, the method further comprises determining an electrical characteristic of the utility grid in real time, comprising: defining at least one second perturbation signal pattern for a reference, in particular current reference, of the power converter; combining, in particular summing component wise, a nominal and/or constant reference with the second perturbation signal pattern for the reference of the power converter, to obtain a second test signal pattern of the reference of the power converter; supplying the second test signal pattern to the physical power converter; determining the electrical characteristic of the grid based on measured voltages and currents at an output terminal of the power converter or at a point of common coupling, wherein the electrical characteristic of the utility grid comprises in particular an impedance or admittance of the utility grid.

The second perturbation signal pattern may be similar or the same or may be different from the first perturbation signal pattern. According to one embodiment of the present invention, the first perturbation signal pattern may substantially be equal or may exactly be equal to the second perturbation signal pattern.

The first perturbation signal pattern and the second perturbation signal pattern may be applied simultaneously or in particular not simultaneously, but subsequently. One or both of the first/second perturbation signal pattern may each comprise at least two components e.g. a d-component and q-component relating to a coordinate system synchronously rotating with or being aligned with the grid voltage phase, e.g. if the digital representation models the grid converter side.

The second perturbation signal pattern may for example be summed with a reference quantity of the power converter, for example reference current or a nominal reference current. The nominal reference current may for example substantially be a constant reference value in the d-q reference frame. The second test signal is supplied to the physical power converter for example at respective terminals where the respective reference quantity, in particular reference current, is to be supplied.

It should be noted that the second test signal pattern is not necessarily supplied to the digital representation of the power converter. Thus, any simulation of the behaviour of the system using the digital representation of the power converter may not be necessary when determining the electrical characteristic of the utility grid in real time.

For obtaining the grid impedance estimation, using the digital representation may not be necessary.

The electrical characteristic of the grid, for example impedance of the grid, may be derived by forming for example ratios between measured voltages and currents, for example at the point of common coupling, or a low voltage side or a high voltage side of a wind farm transformer.

Thereby, the method may not only enable to determine the characteristic of the power converter but also to determine the characteristic of the utility grid. Having determined both these characteristics may enable to perform stability analysis of the system, and in particular may enable to in an improved manner determine or adapt controller parameters settings of the power converter.

According to an embodiment of the present invention, the method further comprises for simulating the operation of the converter: obtaining at the digital representation of the power converter, at least one electrical parameter value of the power converter, in particular by measuring a value of a DC-link voltage at the physical converter; and/or obtaining at the digital representation of the power converter, at least one electrical parameter value of the utility grid, in particular by measuring a value of a voltage at the point of common coupling, using the at least one electrical parameter value of the power converter and/or at least one electrical parameter value of the utility grid for the simulation using the digital representation of the power converter.

Thus, the digital representation of the power converter receives (for example actually measured) electrical parameter value(s) of the power converter and/or the utility grid. Thereby, the simulation may be improved, since real measured or obtained values for the real physical system are considered.

According to an embodiment of the present invention, the at least one first perturbation signal pattern comprises: a first d-component signal pattern and a first q-component signal pattern, wherein the first perturbation signal pattern is component-wise added to a respective d-component and q-component of the voltage of the point of common coupling, to obtain components of the first test signal pattern.

The first d-component signal pattern may be different from the first q-component signal pattern. In this case, the response or the reaction of the digital power converter (corresponding to the physical power converter) may comprise more information for more thoroughly determining the electrical characteristic of the power converter.

According to an embodiment of the present invention, the at least one second perturbation signal pattern comprises: a second d-component signal pattern and a second q-component signal pattern, wherein the second perturbation signal pattern is component-wise added to a respective d-component and q-component of the nominal and/or constant reference for the power converter, to obtain components of the second test signal pattern.

Thereby, also the grid electrical characteristic may be determined in a more thorough manner.

According to an embodiment of the present invention, the first d-component signal pattern, in particular MLBS, and the first q-component signal pattern, in particular IRS, are periodic patterns, which introduce non-overlapping harmonics.

MLBS may stand for maximum length binary sequence which may be easily implementable and may comprise harmonics across a substantial frequency range. IRS may stand for inverse repeat sequence which may be generated from the MLBS by the Hadamard modulation. Thereby, the method may be implemented in a conventional manner and in a simple manner. The harmonics introduced do not overlap in the sense that the MLBS and the IRS do not introduce same frequencies in the sense that any introduced frequency by MLBS is arranged between two adjacent frequencies as introduced by IRS.

According to an embodiment of the present invention, the second d-component signal pattern, in particular MLBS, and the second q-component signal pattern, in particular IRS, are periodic patterns, which introduce non-overlapping harmonics. Thereby, the same advantages are enabled as for the first respective perturbation signal pattern.

According to an embodiment of the present invention, supplying the first test signal pattern to the digital representation of the power converter causes responses of the digital representation of the power converter for plural harmonic frequencies; and/or wherein supplying the second test signal pattern to the physical power converter causes responses of the utility grid for plural harmonic frequencies.

Provoking responses for plural harmonic frequencies enable to more thoroughly determine the characteristic of the power converter and/or utility grid and further improving the potential stability analysis and/or adaptation of controller settings.

According to an embodiment of the present invention, the digital representation of the power converter includes at least one of the following: a digital representation of an output filter, in particular comprising at least one inductance and a capacitor, of the power converter; a digital representation of a current controller; a digital representation of a pulse width modulation module; a digital representation of a voltage source converter, in particular implemented as a switching model; a digital representation of at least one transformation module; a digital representation of an rotational angle observer.

The output filter can be any type of output filter, so it does not need to consist of "at least one inductance or capacitor". It could be just an L-type filter, LC or any of the filter topologies present in the industry.

The digital representation (e.g. twin) must/may include an exact copy of the control running in the real system, including current control and/or power voltage control or whatever the purpose of controlling the system is.

Thereby, realistic modelling of the power converter may be enabled.

According to an embodiment of the present invention, at least one of the following holds: the digital representation of an output filter is connected to the digital representation (27') of a voltage source converter; the digital representation of a current controller provides, in particular based on an output current and a current reference, a reference voltage and is connected to the digital representation of a pulse width modulation module via a transformation module; the digital representation of a pulse width modulation module provides gate driver signals to the digital representation of a voltage source converter; the digital representation of a rotational angle observer provides a rotational angle which is received by at least one transformation module. Thereby, realistic modelling of the power converter may be enabled.

According to an embodiment of the present invention, the electrical characteristic of the power converter is determined as output impedance (e.g. Z_output) or admittance matrix of the power converter for plural frequencies; and/or wherein the electrical characteristic of the utility grid is determined as impedance matrix of the grid for plural frequencies.

Thereby, conventionally utilized quantities for characterizing the power converter and/or utility grid are supported.

For example, the output impedance or admittance matrix may be 2 x 2 matrices thereby including four component values of the respective impedance or admittance. Thereby, also the cross coupling terms are included corresponding to a cross coupling between the d- and the q-components of the currents. Values for the impedance (at particular frequencies) not explicitly measured may be obtained for example by interpolation and/or extrapolation using neighbouring measured values.

According to an embodiment of the present invention, the converter is modelled, in particular when grid following control is performed, as current source with shunt impedance or, the converter is modelled, in particular when grid forming control is performed, as a voltage source and/or
and/or wherein the grid is modelled as ideal voltage source with series impedance or current source with shunt impedance and/or the method comprising: performing stability analysis by studying a transfer matrix based on the converter admittance and the grid impedance for plural frequencies.

Grid following control may involve to not actively inject current/voltage into the grid for changing electrical characteristics of the grid, while grid forming control may involve to actively inject current/voltage into the grid for changing electrical characteristics of the grid, e.g. in order to achieve nominal voltage and/or frequency of the grid.

A grid following (GFL) approach may only be applicable if the wind turbine is working as a current controlled source, but it is also possible to work in grid forming (GFM) approach, so in that case, the wind turbine/converter may be modelled as a voltage source with a corresponding series impedance.

Thereby, a simple model may be provided which may be analyzed using or deriving the transfer matrix.

According to an embodiment of the present invention it is provided a method of adapting a controller of a digital representation of a physical power converter or a controller of a physical power converter of a wind turbine connected to a utility grid, the method comprising: performing a method of determining an electrical characteristic of the physical power converter and/or other components of the wind turbine or generator system and in particular determining an electrical characteristic of the utility grid according to one of the previous embodiments; performing stability analysis based on the electrical characteristic of the physical power converter and the utility grid; adapting at least one controller parameter based on the stability analysis.

For example, one or more controller gains for different harmonics may be adapted and/or other parameter quantities or parameter values, in particular controller settings may be changed or adapted. The adapted controller may then be applied to the physical power converter thereby improving the operation of the power converter also upon or under perturbations within the utility grid.

According to an embodiment of the present invention the adapted controller parameter is applied for controlling the digital representation of the converter, the method further comprising: assessing the operation of the digital representation of the converter while controlled using the adapted controller parameter; applying the adapted controller parameter for control of the physical converter based on the assessment.

In particular, if or only if good performance of the virtual representation is observed, the new adapted controller setting may also applied to the physical converter.

It should be understood, that features, individually or in any combination, disclosed, described, explained or provided for a method of determining electrical characteristic of a physical power converter may also, individually or in any combination, applied to or provided for an arrangement for determining an electrical characteristic of the physical power converter according to embodiments of the present invention and vice versa.

According to an embodiment of the present invention it is provided an arrangement for determining an electrical characteristic of at least of a physical power converter of a wind turbine connected to a utility grid in real time and in particular determining an electrical characteristic of the utility grid in real time, the arrangement comprising: a digital representation, in particular including a digital twin, of the power converter adapted to simulate operation of the physical power converter; an input port adapted to receive a value of at least one electrical parameter of the utility grid; a generation module adapted to define at least one first perturbation signal pattern for the electrical parameter of the utility grid; a combining module adapted to combine, in particular sum component wise, the electrical parameter value of the utility grid and the first perturbation signal pattern for the electrical parameter of the utility grid, to obtain a first test signal pattern of the electrical parameter of the utility grid; a simulating module adapted to simulate the operation of the converter (under the perturbation) upon supplying the first test signal pattern to the digital representation of the power converter; a determining module adapted to determine the electrical characteristic of the power converter based on simulated voltages and currents at an output terminal of the digital representation or at a point of common coupling, the arrangement in particular configured to control or carry out a method according to one of the preceding claims.

The arrangement may be implemented in software and/or hardware and may for example be a portion or a component of a wind turbine controller. The arrangement may comprise a processor such as CPU, may comprise electronic storage and may be connected to one or more measurement sensors or other entities receiving measurement values related to the power converter and/or wind turbine and/or utility grid.

According to an embodiment of the present invention, the arrangement further includes a processing system; a programmable logic, the processing system in particular comprising/enabling at least one of: control of the real wind turbine; a digital representation of the wind turbine; a controller; estimation algorithms; stability assessment, the programmable logic in particular enabling at least one of: acquisition of measurement data; handling of execution of the digital representation; PWM generation.

Thereby, a particular implementation may be provided, to which the invention is, however, not restricted.

According to an embodiment of the present invention it is provided a wind turbine, comprising: a physical power converter connectable or connected to a utility grid; an arrangement according to one of the preceding embodiments; in particular a controller.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a wind turbine according to an embodiment of the present invention including an arrangement of determining an electrical characteristic of at least a power converter according to an embodiment of the present invention;

Fig. 2 schematically illustrates a physical power converter as well as a digital representation of the power converter as considered according to embodiments of the present invention;

Fig. 3 schematically illustrates a digital representation as well as a physical power converter considered in embodiments of the present invention;

Figs. 4, 5, 6 and 7 illustrate examples of perturbation signal patterns including frequency distribution as employed according to embodiments of the present invention;

Fig. 8 schematically illustrates a real-time assessment method as considered in embodiments of the present invention;

Fig. 9 illustrates a flow-chart relating to controller parameter adaptation as employed according to embodiments of the present invention;

Fig. 10 and 11 illustrate models of the converter or the generator system applied during different control schemes.

<u>Detailed Description</u>

The illustration in the drawings is in schematic form.

It should be made clear that the embodiments of the present invention may be able to integrate a digital twin as a tool to obtain the complete characteristics of the turbine converter, which can be applied to both DFIG and FC. Obviously in the examples shown in the figures there is only one converter, but the concept can be extrapolated to any system with any number of converters (such as 2, 3, 4 or higher number), as long as the computational limitation of the control platform where it is to be integrated.

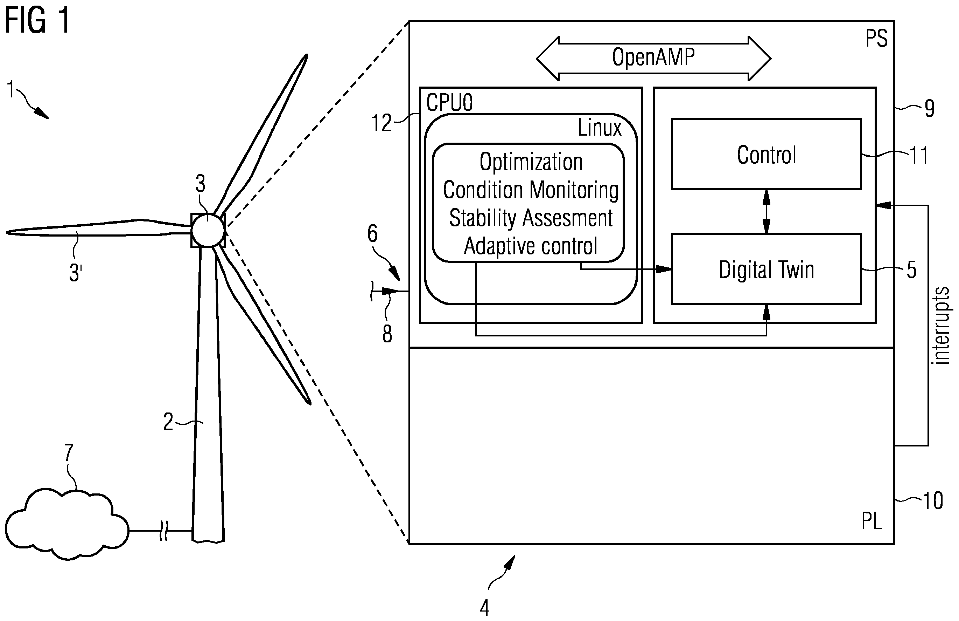

The wind turbine 1 schematically illustrated in Fig. 1 comprises a wind turbine tower 2 on top of which a nacelle 3 is mounted which harbours a generator at which plural rotor blades 3' are mounted. The nacelle 3 further comprises or harbours an arrangement 4 according to an embodiment of the present invention for determining an electrical characteristic of at least a physical power converter of the wind turbine.

The power converter not explicitly illustrated in Fig. 1 is electrically coupled and receives AC power from a generator which is driven by the rotor blades 4. The arrangement 4 is configured to perform or carry out or control a method of determining an electrical characteristic of the physical power converter according to an embodiment of the present invention.

The arrangement 4 comprises a digital representation 5 of the power converter which is adapted within the arrangement 4 to simulate the operation of the physical power converter. The arrangement 4 further comprises an input port 6 adapted to receive a value of at least one electrical parameter of the utility grid 7 to which the wind turbine 1 is connected. The arrangement 4 comprises within its components a generation module adapted to define at least one first perturbation signal pattern for the electrical parameter of the utility grid. Further, the arrangement 4 comprises a combining module which is adapted to combine the electrical parameter value of the utility grid 8 and the first perturbation signal pattern to obtain a first test signal pattern of the electrical parameter of the utility grid. The arrangement further comprises a simulating module (in particular comprising the digital representation 5 of the power converter) which is adapted to simulate the operation of the converter upon supplying the first test signal pattern to the digital representation 5 of the power converter. Furthermore, the arrangement comprises a determining module adapted to determine the electrical characteristic of the power converter based on simulated voltages and currents at an output terminal of the digital representation.

The arrangement 4 illustrated in Fig. 1 is implemented in a particular implementation, as will be detailed below: The embodiments of the present invention may use the application of a digital twin (DT) to evaluate WTG stability and adapts its controllers parameters accordingly. As an example, a specific application for modifying control setting for enlarging stability margins based on converter impedance and grid impedance is detailed. However it may be employed also for constant monitoring and maintenance purposes.

Thanks to digital twin, control settings modification can be verified online. In the process definition this alternative may include:

- Disturb the grid
- Magnitude and frequency of disturbed signal may depend on the grid to connect
- Estimate the grid impedance
- Disturb virtual system
- Estimate converter impedance
- Stability analysis based on impedance calculated
- Verification of updated control settings
- Introduction of new control settings

The arrangement 4 is implemented comprising a processing system 9 as well as programmable logic 10. The processing system 9 comprises a control module 11, the digital representation 5 which interact communicatively with a CPU 12. The programming logic 10 may control the operation of the processing system for performing the simulation.

DT defines a digital representation of a physical system which estimates their outputs. Typically, it consists of three main components: an actual physical system, the digital entity and the communication channel between them. This fact is a clear advantage with respect to traditional simulation methods. The principal reason is that the DT uses data provided by sensors installed in physical systems, which provide relevant information to the control.

The goal of this digital replica is the optimization of WTG performance by means of a constant monitorization. in Fig. 1, the arrangement 4 comprises a processing System (PS) 9 and Programmable Logic (PL) 10.

On the one hand, the PL side includes Intellectual Properties (IPs) that enable PWM generation, management of signal adquisition and the handling of DT execution.

On the other hand, the PS counts with the following characteristics:

- Control and management of the real WTG,
- Digital representation of the physical system in conjunction with digital control loops.
- Algorithm which evaluates differences between physical system and digital one and optimize and adapts the DT accordingly.
- Estimation algorithm to introduce PRBS technique in order to obtain a frequency response of the impedances of the system.
- Stability assessment algorithm that performs an analysis of the minor loop between grid and output

impedances, seeking to adapt control to avoid critical frequency resonances leading to instability.

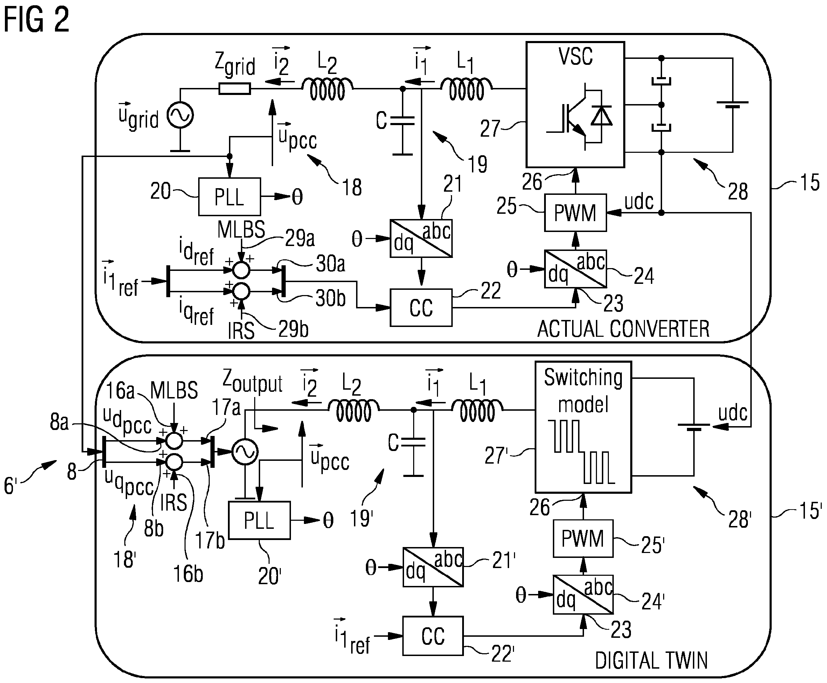

**Fig. 2** schematically illustrates the actual converter 15 as well as the digital representation 15' of the power converter for a grid following mode of operation. In Fig. 2 the physical representation is labelled with unprimed reference signs, the digital representation is labelled with primed reference signs.

The digital representation 15' may correspond to the digital representation 5 comprised in the arrangement 4. At the input port 6', the digital representation 15' (digital twin) of the power converter receives a value 8 of an electrical parameter of the utility grid, in the present embodiment the voltage at the point of common coupling U_PCC. By a not in detail illustrated transformation module, the utility grid voltage U_PCC at the point of common coupling is transformed into respective d- and q-component in order to derive the voltage components U_d_PCC and U_d_PCC which are received thereby by the digital representation 15'.

Furthermore, in the illustrated embodiment, the respective components of the utility grid voltage are combined with respective components of a first perturbation signal pattern 16a, 16b. The components 16a, 16b are combined, in particular summed component-wise, with the electrical parameter value 8a, 8b (U_d_pcc, U_q-pcc) in order to derive a first test signal pattern 17a, 17b which are also defined as respective d- and q-components. By this provision, the digital representation 15' can be evaluated upon a digital perturbation in the utility grid and the responses and reactions can be studied.

The operation of the power converter 15 is then simulated upon supplying the first test signal pattern 17a, 17b to the digital representation 15' of the power converter. The electrical characteristic of the power converter is then determined based on simulated voltages and currents (in particular u_pcc and i_2) an output terminal 18 of the digital representation.

The electrical characteristic determined according to this embodiment may be Z_output, i.e., the impedance of the power converter. The impedance can be determined by measuring the current i_2 and the voltage u_pcc as indicated in Fig. 2.

The digital representation 15' of the power converter is modelled comprising a grid output filter 19' comprising inductivities L_1, L_2 as well as a capacitance C which is shunt connected while the inductances L_1, L_2 are series conducted. In other embodiments, the grid output filter may be modelled in a different manner with one of more inductive and/or capacitive elements.

The digital representation comprises a phase-locked loop 20' providing an estimation of the rotational position θ. The digital representation 15' further comprises transformation module 21' for transforming between a (fixed) abc frame to a (rotating) dq-frame. Furthermore, the digital representation 15' comprises a current controller 22' which receives a reference current i_1ref and provides an output signal, for example control voltage 23, to another transformation module 24' which transforms the voltages or control signal 23 to a control signal in the abc, i.e., stationary frame. The digital representation further comprises a pulse width modulation module or box 25' which provides pulse width modulation signals 26 to a switching module 27' which is also included in the digital representation 15'. The switching model 27' models a grid side portion of the converter 15. Furthermore, the digital representation 15' models a DC link 28' as a digital model.

In the actual or physical converter 15, those elements mentioned for the digital representation 15' are labelled with the same reference sign without the prime. Each of the digital components included in the digital representation 15' model operation of the actual respective component in the physical converter 15 illustrated in Fig. 2.

Embodiments of the present invention enable not only to determine the electrical characteristic of the power converter but also the electrical characteristic of the utility grid. Therefore, a second perturbation signal pattern 29a, 29b is defined for a reference of the power converter, in the present embodiment the current reference. The second perturbation signal pattern comprises the components 29a and 29b, for example MLBS and IRS. Furthermore, the nominal or constant current reference is component-wise combined with the components of the second perturbation signal pattern. Thus, the reference currents in the dq-frame, i.e., i_d_ref and i_q_ref, is summed with the respective component 29a, 29b of the second perturbation signal pattern to obtain a second test signal pattern 30a, 30b.

This second test signal pattern 30a, 30b is supplied to the physical power converter as a perturbed reference current and is supplied (e.g. component wise) to the current controller 22. The current controller 22 thereupon generates a voltage signal 23 which is via the transformation module 24 and the pulse width modulation module 25 supplied to the grid side converter portion 27 for controlling this portion. Then, the electrical characteristic of the utility grid is based on measured voltages and currents and an output terminal of the power converter 18 or a point of common coupling. Thereby, the response of the utility grid is measured enabling to determine the electrical characteristic, in particular impedance of the utility grid.

As can be appreciated from Fig. 2, for performing the simulation, the digital representation 15' obtains or is supplied with at least one electrical parameter value of the power converter, namely the voltage u_dc of the DC link 28. Furthermore, the digital representation 15' receives also at least one electrical parameter of the utility grid, namely the voltage 8 of point of common coupling.

The first and/or second test signal patterns 30a, 30b, 17a, 17b may cause perturbations across a particular frequency range of harmonics. The voltages and currents may be measured at the output terminal of the converter or may be simulated at the output terminal of the converter across an entire frequency range in order to determine the respective electrical characteristic, in particular impedance of the power converter and/or the utility grid across a frequency range.

Fig. 2 illustrates that the digital representation 15' corresponds to its physical equivalent 15. Thereby, the power converter is connected to the grid which is represented by its Thevenin equivalent.

The representation of the grid is usually represented by its Thevenin equivalent model, which is formed by a voltage source and a series impedance. Normally, this impedance is considered as an inductance and resistance in series in the most straightforward case, nonetheless, in the most general case, it could represent whatever impedance shape that could be the equivalent impedance of the whole utility grid from the point of view of the PCC.

The main elements involved are a synchronization system that could be a PLL or FLL, current controllers and PWM.

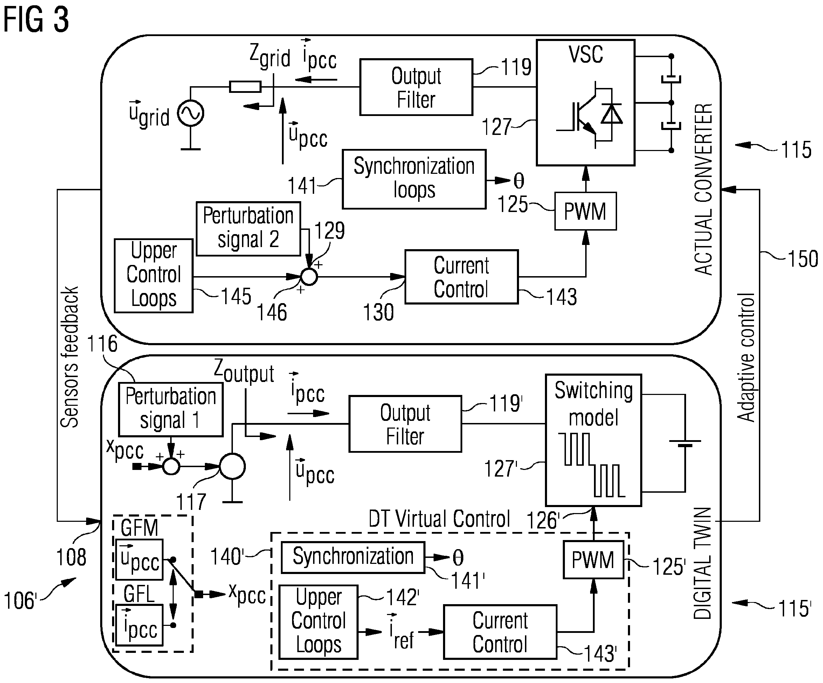

**Fig. 3** schematically illustrates a digital representation 115' as well as a physical power converter 115 considered in embodiments of the present invention.

It should be understood that features or elements in the different figures are labelled with reference signs ending with the same digits. A description of one element illustrated or mentioned with respect to a particular figure may be taken from the description of the corresponding element or structure in another embodiment or illustration.

The digital representation 115' of the power converter (or in general a generator system) comprises the input port 106' via which the digital representation 115' receives a value 108 of an electrical parameter of the utility grid. Thereby, the input parameter 108 provides sensor feedback, for example based on actual measurement. The sensor feedback may comprise a voltage and/or a current at the point of common coupling, denoted as U_PCC or I_PCC. The voltage of the point of common coupling may for example be utilized in the grid forming mode (GFM) and the current at the point of common coupling may for example be utilized in the grid following mode (GFL) (see also Fig. 2).

Generically, the input value or parameter is denoted as x_PCC. The input parameter 108 or x_PCC is combined with respective perturbation signal pattern 116 to result in the first test signal pattern 117. The operation of the power converter 115 is then simulated upon supplying the first test signal pattern 117 to the virtual representation 115'. The digital representation 115' comprises a digital representation control or controller 140' comprising a synchronization module 141', an upper control loop module 142' and a current control module 123' as well as a pulse width modulation module 125'. Further, the digital representation 115' comprises an output filter 119' connected to a switching model 127' which receives control signals 126' from the pulse width modulation unit 125'.

The physical converter 115 comprises the output filter 119, the voltage source converter portion 127, a pulse width modulation unit 125, a current control unit 143, a synchronization loop unit 141. The physical power converter 115 may receive a second perturbation signal pattern 129 which is combined with a signal output by an upper control loop module 145, for example providing a reference signal. The combination of the signals 129 and the reference signals 146 results in the signal 130 which is provided to the current control unit 143.

The arrow 150 indicates the possibility of adaptive control of the one or more control settings or control parameters of the one or more control portions included in the physical converter 115.

Depending on the control structure, such as grid forming (GFM) or grid following (GFL), the input to the digital representation 115' can be the PCC voltage or the PCC current, respectively.

Furthermore, the perturbation signal 116 is introduced in the input of the current control, but it can also be injected into any path of the actual control, such as the power control, the DC bus control or even directly to modulators going into the PWM module 125'.

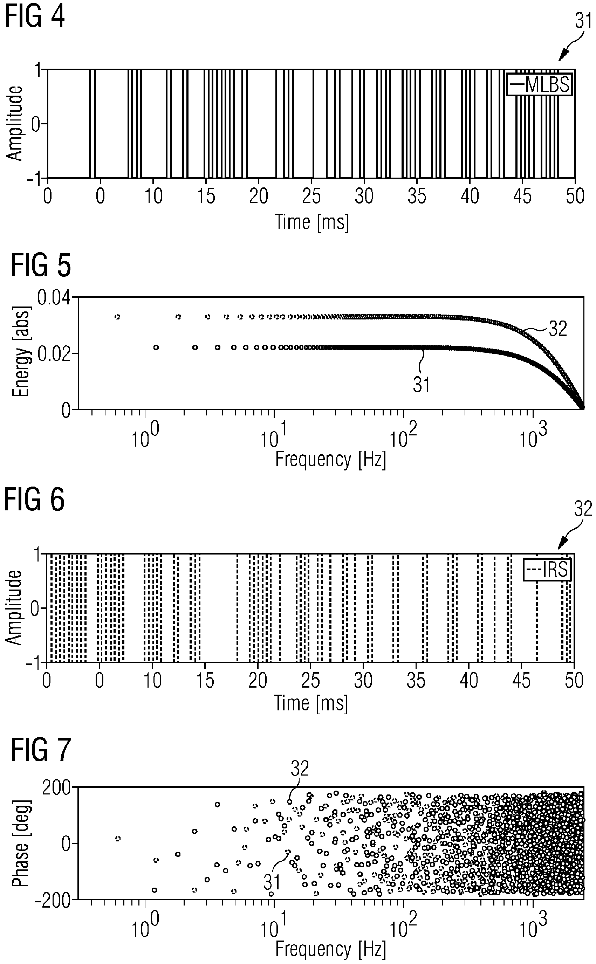

**Figs. 4, 5, 6** and **7** illustrate examples of a first/second perturbation signal pattern as employed according to embodiments of the present invention. Figs. 4 and 6 thereby illustrate the amplitude of MLBS 31 and IRS 32, respectively, over time. Fig. 5 illustrate the energy and Fig. 7 the phase of both sequences across a frequency range.

The first d-component signal pattern 16a may for example be an MLBS pattern and the first q-component signal pattern may for example an IRS pattern or vice versa. Those patterns MLBS and IRS do not overlap and therefore enable thorough analysis for different frequencies in the d- and the q-components.

The grid impedance and output admittance estimation may be performed by means of PRBS injection technique. They are broadband signals which are used for rapid identification of the frequency response of systems. One of the most common sequences is called Maximum Length Binary Sequence (MLBS), which has two levels and can be generated easily using shift registers. It is a periodic signal with a length of $N = 2n - 1$, where $n$ represents the number of shift registers. Another important remark is the generation frequency, *fgen,* defining the lowest frequency with energy (*fgen/N*). The series of harmonics introduced by MLBS sequence are located in following frequencies:

$$f_k{}^{MLBS} \; = \; k \; * \; fgen/N \; , \; k \; = \; 1,2,3 \; … \; N$$

With regards to the inverse repeat sequence (IRS), it is generated from MLBS by applying the Hadamard modulation. The length of the sequence is $2N$ and it has energy at the following frequencies:

$$f_k{}^{IRS} \; = \; (2k \; - \; 1) \; * \; fgen/2N \; , \; k \; = \; 1,2,3 \; … \; N$$

The harmonics introduced by IRS fall exactly between the frequencies of MLBS. This enables both sequences to be introduced simultaneously to obtain a DQ impedance estimation, including the cross-coupling terms (see Fig. 4, 6).

Regarding the grid impedance identification, the two orthogonal disturbances are added to Idref and Iqref (see Fig. 2). Conversely, the output admittance estimation consists of introducing MLBS and IRS sequences in the PCC voltage inputs of the DT 15'. In the first case, the actual PCC voltages will be disturbed by the injection of the broadband signals in the current references. In the second case, the digital currents in the PCC will be influenced by the distortion introduced in the voltage. These signals are recorded and it is obtained their frequency response by means of DFT method. Assuming that the impedances do not change between the measurements recording, two sets of equations can be written, where subscript 1 and 2 denote MLBS and IRS injection, respectively:

$$Vd1 \; = \; ZddId1 \; + \; ZdqIq1$$

$$Vq1 \; = \; ZqdId1 \; + \; ZqqIq1$$

$$Vd2 \; = \; ZddId2 \; + \; ZdqIq2$$

$$Vq2 \; = \; ZqdId2 \; + \; ZqqIq2$$

Once both impedance calculations are done stability analysis can be made thanks to Nyquist criterion.

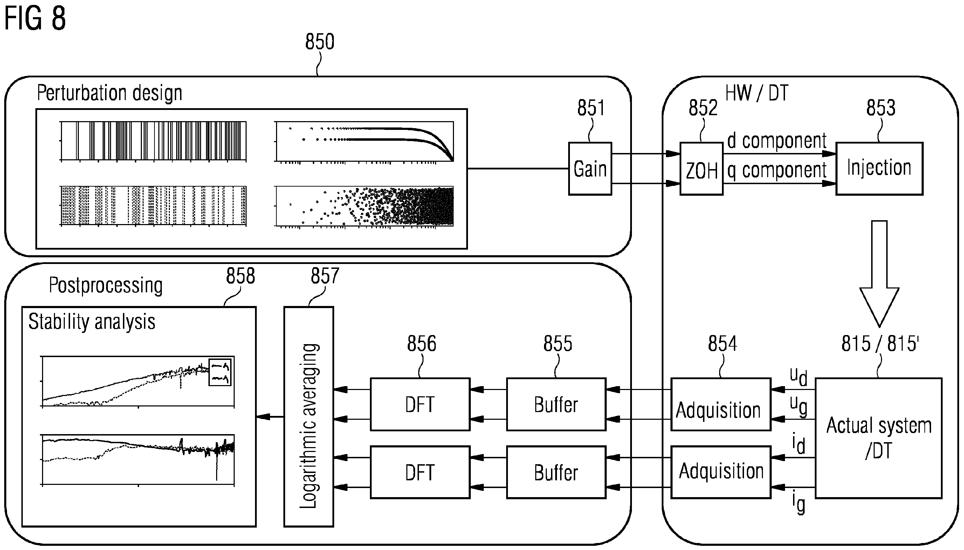

**Fig. 8** schematically illustrates a real-time assessment method as considered in embodiments of the present invention. In a box 850, a perturbation design is performed in order to define injection signals. The injection signals may for example be designed as is explained with reference to Figs. 4, 5, 6, 7 above. A gain module 851 selects or defines an appropriate gain defining the amplitude of the signal to be injected. A transformation module 852 may split the one or more injection signals or test signals into respective d- and q-components. The respective components may then be supplied to injection module 853 injecting the signals into the real or digital converter or generator system.

The response of the actual system 815 or the digital twin or digital representation 815' is then monitored or observed including at least reception of an electrical parameter of the utility grid or response signals of the power converter or the generator system. The monitored quantities are first acquired in boxes 854 and then buffered optionally in modules 855. In the modules 856, a discrete Fourier transformation may be performed and a logarithmic averaging may be performed in a module 857. In a post-processing module 858, stability analysis may be performed.

Herein, a perturbation injection in the physical converter may be applied in order to estimate the grid impedance. An injection in the digital representation of the power converter (for example illustrated in Figs. 1 or 3 above) may be applied in order to obtain the output impedance of the converter system or generally the generator system.

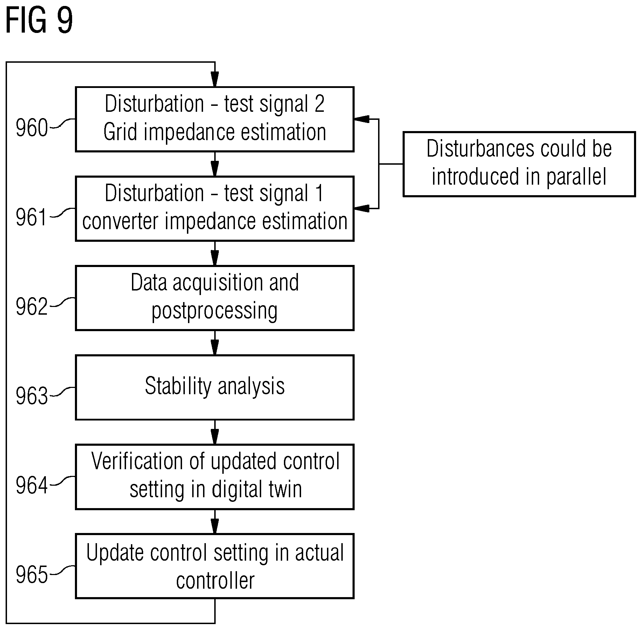

**Fig. 9** illustrates a flow-chart relating to controller parameter adaptation as employed according to embodiments of the present invention. In a block 960, a second test signal is injected in order to allow grid impedance estimation. In a block 961, the first test signal is injected, in order to allow converter impedance estimation. In block 962, data acquisition and post-processing is performed, as is for example illustrated on the lower left in Fig. 8. In block 963, a stability analysis is performed. In a block 964, control settings may be updated in the digital representation and may be verified, including assessment during simulated operation. If the assessment results in a positive result, in a block 965, the control settings may be updated in the physical power converter or in general generator system.

It should be understood that the disturbance test patterns injected according to blocks 960 and 961 may also be introduced in parallel, i.e., synchronously. In other embodiments, they may be applied subsequently.

The digital representation may be modified with the adapted or new controller settings before actually changing the controller of the physical converter. Once the digital representation exhibits - with the new or adapted controller parameter settings - an expected or improved operational behaviour, the adaptation of the control settings may be performed in the physical system, thereby introducing an additional layer of security when modifying sensitive controls.

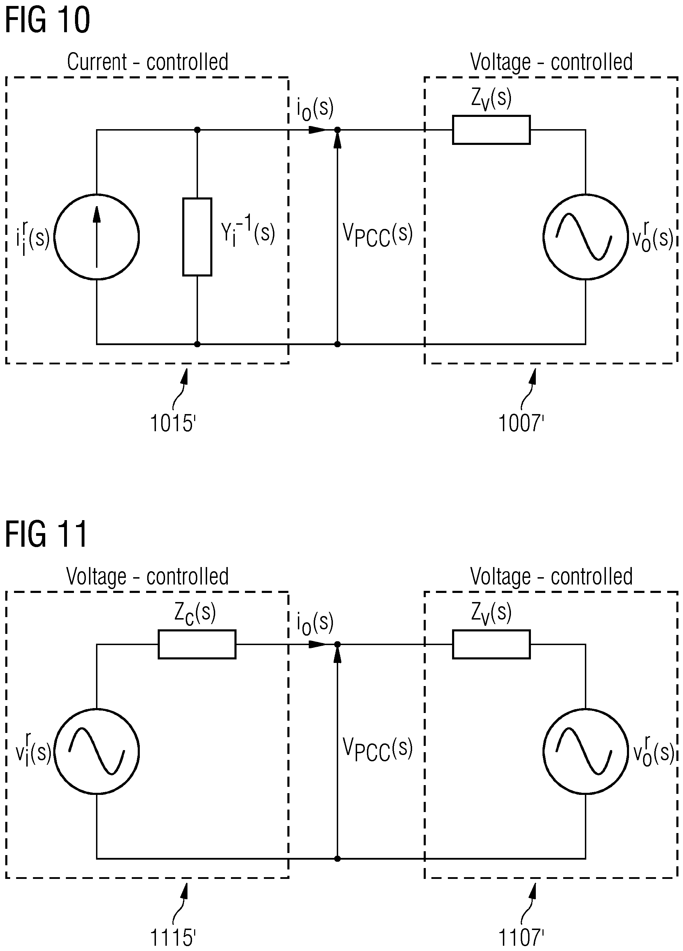

**Figs. 10 and 11** illustrate models of the converter or the generator system applied during different control schemes. In the model illustrated in Fig. 10, the digital representation 1015' of the converter or in general the generator system is modelled as a current source, while in the embodiment illustrated in Fig. 11, the converter 1115' is modelled as a voltage source. In Fig. 10, the GFL vs. GFM scheme applies, while in the Fig. 11, the GFM vs. GFM scheme applies. In both cases, the grid 1007', 1107' may be modelled as a voltage source.

In the GFM vs. the GFL case, the characteristic equation to study the stability is defined as follows:

$$L(s) = \left[ I + Z_v(s) Y_i(s) \right]^{-1}$$

In the GFM vs. GFM case, the characteristic equation to study the interactions between impedance can be defined as:

$$L(s) = \left[ Z_v(s) + Zc(s) \right]^{-1}$$

Depending on the type of control of the machine, the digital representation accurately models the behaviour of the physical system and to perform the stability analysis, it will be taken into account whether the wind turbine or the generator system or the converter is acting as a controlled voltage source (GFM) or as a controlled current source (GFL).

Based on results obtained regarding stability analysis current controllers gains can be modified for enhancing stability criteria. This adjustment may be made through gain scheduling or online considering metaheuristic algorithm such as genetic algorithm or particle swarm optimization.

Embodiments of the present invention may provide the following technical features and/or advantages to which, however, the invention is not restricted:

One contribution of this application is the use of the DT concept to perform a system stability analysis, detecting the most problematic frequencies that could cause WTG instability. The proposal allows to obtain in parallel a real-time estimation of the grid impedance and the output admittance of the grid-connected system through the injection of orthogonal components. The advantage of using two orthogonal sequences injected simultaneously is the ability to obtain a high accuracy estimation, including the cross-coupling terms of the impedance in dq frame, in a single period of injection.

Another important highlight, which makes the major difference compared to the prior art, is the use of a closed-loop DT, which includes an exact replica of the control used in the real system. Therefore, the output impedance estimation takes into account the actual dynamic behaviour, through the control loops and digital replica inputs, as well as the effect of the operating point at the instant of the estimation process (active and reactive power references) and non-linear behaviour such as saturations and PLL/FLL.

The proposal provides a basic method to adapt the controls in an appropriate way to ensure adequate system behaviour and stability.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of determining an electrical characteristic at least of a physical power converter (15) or a generator system of a wind turbine (1) connected to a utility grid (7) in real time and in particular determining an electrical characteristic of the utility grid (7) in real time, the method comprising:

    providing a digital representation (15'), in particular including a digital twin, of the power converter (15) or a generator system adapted to simulate operation of the physical power converter or the generator system;
    obtaining a value (8) of at least one electrical parameter (U_pcc, I_pcc) of the utility grid (7);
    defining at least one first perturbation signal pattern (16a, 16b) for the electrical parameter (U_pcc, I_pcc) of the utility grid;

combining, in particular summing component wise, the electrical parameter value (8) of the utility grid and the first perturbation signal pattern (16a, 16b) for the electrical parameter of the utility grid, to obtain a first test signal pattern (17a, 17b) of the electrical parameter (U_pcc, I_pcc) of the utility grid;

simulating the operation of the converter or the generator system upon supplying the first test signal pattern (17a, 17b) to the digital representation (15') of the power converter;

determining the electrical characteristic (Z_output) of the power converter (15) or the generator system based on simulated voltages (u_pcc) and currents (i2) at an output terminal of the digital representation (15') of the power converter or at a digital representation of a point of common coupling.

2. Method according to the preceding claim,

   wherein the electrical characteristic of the power converter comprises an output impedance (Z_output) or admittance of the power converter and/or

   wherein the at least one electrical parameter of the utility grid comprises a voltage (U_pcc) or a current (I_pcc) at a point of common coupling at which plural wind turbines are connected to provide output power, in particular a PCC-voltage, and/or

   wherein obtaining the value of the at least one electrical parameter of the utility grid comprises measuring a value of the voltage or the current at a point of common coupling.

3. Method according to one of the preceding claims, the method comprising determining an electrical characteristic of the utility grid (7) in real time, comprising:

   defining at least one second perturbation signal pattern (29a, 29b) for a reference, in particular current reference (i1_ref), of the power converter (15);

   combining, in particular summing component wise, a nominal and/or constant reference (id_ref, iq_ref) with the second perturbation signal pattern (29a, 29b) for the reference of the power converter, to obtain a second test signal pattern (30a, 30b) of the reference of the power converter (15);

   supplying the second test signal pattern (30a, 30b) to the physical power converter (15);

   determining the electrical characteristic of the grid based (7) on measured voltages (u_pcc) and currents (i2) at an output terminal (18) of the power converter (15) or at a point of common coupling,

   wherein the electrical characteristic of the utility grid comprises in particular an impedance (Z_g) or admittance of the utility grid.

4. Method according to one of the preceding claims, the method further comprising for simulating the operation of the converter:

   obtaining at the digital representation (15') of the power converter, at least one electrical parameter value (u_DC) of the power converter, in particular by measuring a value of a DC-link voltage at the physical converter; and/or

   obtaining at the digital representation (15') of the power converter, at least one electrical parameter value (8) of the utility grid, in particular by measuring a value of a voltage or a current at the point of common coupling;

   using the at least one electrical parameter value of the power converter and/or at least one electrical parameter value of the utility grid for the simulation using the digital representation of the power converter.

5. Method according to one of the preceding claims, wherein the at least one first perturbation signal pattern comprises:

   a first perturbation d-component signal pattern (16a) and a first perturbation q-component signal pattern (16b), wherein the first perturbation signal pattern is component-wise added to a respective d-component and q-component of the voltage of the point of common coupling, to obtain components of the first test signal pattern;

   wherein the first perturbation d-component signal pattern (16a), in particular MLBS, and the first perturbation q-component signal pattern (16b), in particular IRS, are periodic patterns, which introduce non-overlapping harmonics.

6. Method according to one of the preceding claims, wherein the at least one second perturbation signal pattern comprises:

   a second perturbation d-component signal pattern (29a) and a second perturbation q-component signal pattern (29b),

wherein the second perturbation signal pattern is component-wise added to a respective d-component and q-component of the nominal and/or constant reference for the power converter, to obtain components of the second test signal pattern,

wherein the second perturbation d-component signal pattern (29a), in particular MLBS, and the second perturbation q-component signal pattern (29b), in particular IRS, are periodic patterns, which introduce non-overlapping harmonics.

7. Method according to one of the preceding claims,

wherein supplying the first test signal pattern (17a, 17b) to the digital representation of the power converter causes responses of the digital representation (15') of the power converter for plural harmonic frequencies; and/or

wherein supplying the second test signal pattern (30a, 30b) to the physical power converter causes responses of the utility grid for plural harmonic frequencies, and/or

wherein the digital representation (15'), of the power converter (15) includes at least one of the following:

a digital representation (19') of an output filter (19), in particular comprising at least one inductance (L1, L2) and a capacitor (C), of the power converter;

a digital representation (22') of a current controller (22) ;

a digital representation (25') of a pulse width modulation module (25)

a digital representation (27') of a voltage source converter (27), in particular implemented as a switching model;

digital representation (21', 24') of at least one transformation module (21, 24);

a digital representation (20') of a rotational angle observer (20).

8. Method according to one of the preceding claims, at least one of the following holds:

the digital representation (19') of an output filter (19) is connected to the digital representation (27') of a voltage source converter (27);

the digital representation (22') of a current controller (22) provides, in particular based on an output current and a current reference, a reference voltage and is connected to the digital representation (25') of a pulse width modulation module (25) via a transformation module;

the digital representation (25') of a pulse width modulation module (25) provides gate driver signals to the digital representation (27') of a voltage source converter (27);

the digital representation (20') of a rotational angle observer (20) provides a rotational angle which is received by at least one transformation module.

9. Method according to one of the preceding claims,

wherein the electrical characteristic of the power converter is determined as output impedance (Z_output) or admittance matrix of the power converter for plural frequencies; and/or

wherein the electrical characteristic of the utility grid is determined as impedance matrix (Z_g) of the grid for plural frequencies.

10. Method according to one of the preceding claims,

wherein the converter is modelled, in particular when grid following control is performed, as current source with shunt impedance or,

the converter is modelled, in particular when grid forming control is performed, as a voltage source and/or

wherein the grid is modelled as ideal voltage source with series impedance or current source with shunt impedance and/or

the method comprising: performing stability analysis by studying a transfer matrix based on the converter admittance and the grid impedance for plural frequencies.

11. Method of adapting a controller of a digital representation of a physical power converter or a controller of a physical power converter of a wind turbine connected to a utility grid, the method comprising:

performing a method of determining an electrical characteristic of at least the physical power converter (15) and/or other components of the wind turbine or generator system and in particular determining an electrical characteristic of the utility grid according to one of the previous claims;

performing stability analysis based on the electrical characteristic of the physical power converter and the utility grid;

adapting at least one controller parameter based on the stability analysis.

12. Method according to the preceding claim,

wherein the adapted controller parameter is applied for controlling the digital representation of the converter, the method further comprising:

assessing the operation of the digital representation of the converter while controlled using the adapted controller parameter;

applying the adapted controller parameter for control of the physical converter based on the assessment.

13. Arrangement (4) for determining an electrical characteristic of at least a physical power converter (15) of a wind turbine connected to a utility grid (7) in real time and in particular determining an electrical characteristic of the utility grid in real time, the arrangement comprising:

a digital representation (15'), in particular including a digital twin, of the power converter (15) or a generator system adapted to simulate operation of the physical power converter or the generator system;

an input port (6) adapted to receive a value (8) of at least one electrical parameter ($U\_pcc$; $I\_pcc$) of the utility grid (7);

a generation module adapted to define at least one first perturbation signal pattern (16a,b) for the electrical parameter of the utility grid;

a combining module adapted to combine, in particular sum component wise, the electrical parameter value of the utility grid and the first perturbation signal pattern for the electrical parameter of the utility grid, to obtain a first test signal pattern (17a, 17b) of the electrical parameter of the utility grid;

a simulating module adapted to simulate the operation of the converter upon supplying the first test signal pattern (17a, 17b) to the digital representation (15') of the power converter;

a determining module adapted to determine the electrical characteristic of the power converter based on simulated voltages and currents at an output terminal of the digital representation or at a point of common coupling,

the arrangement in particular configured to control or carry out a method according to one of the preceding claims.

14. Arrangement according to the preceding claim, including:

a processing system (9);
a programmable logic (10),
the processing system in particular comprising/enabling at least one of:

control of the real wind turbine;
a digital representation of the wind turbine;
a controller;
estimation algorithms;
stability assessment.

the programmable logic in particular enabling at least one of:

acquisition of measurement data;
handling of execution of the digital representation;
PWM generation.

15. Wind turbine (1), comprising:

a physical power converter (15) or a generator system connectable or connected to a utility grid;
an arrangement (4) according to one of the preceding claims 13 or 14;
in particular a controller.

# FIG 1

EP 4 625 747 A1

FIG 2

ACTUAL CONVERTER

DIGITAL TWIN

EP 4 625 747 A1

FIG 3

EP 4 625 747 A1

FIG 4

FIG 5

FIG 6

FIG 7

FIG 8

# FIG 9

960 — Disturbation – test signal 2
Grid impedance estimation

961 — Disturbation – test signal 1
converter impedance estimation

Disturbances could be
introduced in parallel

962 — Data acquisition and
postprocessing

963 — Stability analysis

964 — Verification of updated control
setting in digital twin

965 — Update control setting in actual
controller

## FIG 10

Current - controlled

Voltage - controlled

$i_O(s)$

$Z_V(s)$

$i_i^r(s)$

$Y_i^{-1}(s)$

$V_{PCC}(s)$

$v_O^r(s)$

1015'

1007'

## FIG 11

Voltage - controlled

Voltage - controlled

$Z_C(s)$

$i_O(s)$

$Z_V(s)$

$v_i^r(s)$

$V_{PCC}(s)$

$v_O^r(s)$

1115'

1107'

Europäisches
Patentamt
European
Patent Office
Office européen
des brevets

## EUROPEAN SEARCH REPORT

**Application Number**

EP 24 38 2330

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 872 239 B (NORTH CHINA ELECTRIC POWER UNIV BAODING) 8 September 2023 (2023-09-08) * paragraphs [0006] - [0068]; figures 1-4 * | 1-15 | INV. H02J3/38 |
| A | CN 116 224 831 A (STATE GRID HENAN ELECTRIC POWER CO ANYANG POWER SUPPLY CO) 6 June 2023 (2023-06-06) * figures 1,2 * | 1-15 | |

**TECHNICAL FIELDS SEARCHED (IPC)**

H02J

The present search report has been drawn up for all claims

| Place of search | Date of completion of the search | Examiner |
|---|---|---|
| Munich | 13 September 2024 | Bergler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2330

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2024

| Patent document cited in search report | | Publication date | Patent family member(s) | Publication date |
|---|---|---|---|---|
| CN 113872239 | B | 08-09-2023 | NONE | |
| CN 116224831 | A | 06-06-2023 | NONE | |

EPO FORM P0459

For more details about this annex : see Official Journal of the European Patent Office, No. 12/82